# EUROPEAN PATENT SPECIFICATION

(11) **EP 4 121 816 B1**
(45) Date of publication and mention of the grant of the patent: **03.09.2025**
(21) Application number: 21718019.9
(22) Date of filing: 18.03.2021
(51) Int. Cl.: G02F 1/1503, G02F 1/1506, G02F 1/1514, G02F 1/1516

(54) **ELECTROCHROMIC DEVICE AND METHOD FOR PRODUCING THE SAME**
ELEKTROCHROME VORRICHTUNG UND VERFAHREN ZUR HERSTELLUNG DAVON
DISPOSITIF ÉLECTROCHROMIQUE ET SON PROCÉDÉ DE FABRICATION

(30) Priority: 19.03.2020 EP 20164333
(43) Date of publication of application: 25.01.2023
(73) Proprietor: Freshape SA, 1020 Renens VD (CH)
(72) Inventor: KUNG, Yen-Cheng, 1110 Morges (CH); CIOBANU, Marius, 1607 Palézieux (CH); LIU, Yuhang, 1030 Bussigny (CH)
(74) Representative: Schneiter, Sorin
(86) International application number: PCT/EP2021/057023
(87) International publication number: WO 2021/185999

(56) References cited:
- EP-A1- 1 347 330
- US-A1- 2012 154 892

## Description

### Technical Field

The present invention relates to an electrochromic device, in particular an electrochromic display, to a method for depositing organic electrochromic materials so as to provide pixels or subpixels of the electrochromic device, and to a method for producing the electrochromic device.

### Background Art and Problems Solved by the Invention

Electrochromic devices exploit the particular characteristics of electrochromic materials. Such materials, also called electrochromophores, can reversibly change their light absorbing characteristics when undergoing a redox reaction. In electrochromic devices, a system of opposing electrodes and an electrolyte is typically used so as to control the reversible and repeated oxidation and reduction of the electrochromic materials and to adjust the desired color displayed by the device. By applying an electric potential of the appropriate amount and sign between the electrodes the reduction or oxidation of the electrochromic material is achieved. An ion transport is mediated by the electrolyte so as to equilibrate charges at the electrodes.

Many different types of materials are reported to exhibit electrochromism. Examples of inorganic materials include certain metal oxides, such as tungsten-oxide (WO₃). An example of an organic electrochromic compound is viologen. US2017/0192334 discloses different derivatives of viologen having different colors, in particular derivatives having red, green and blue color are disclosed.

Electrochromic displays have certain properties that distinguish them from other displays, such as liquid crystal displays (LCD) or organic light emitting diode (OLED) displays. Electrochromic displays do not emit light themselves, but reflect or transmit the light of the environment in accordance with the color characteristics of the electrochromic material. As such, electrochromic displays are sometimes called "passive displays". Continued use of an electrochromic display is considered to be less tiring to the human eye than light emitting, illuminating displays, such as the above-mentioned LCDs and OLED displays. Watching an electrochromic display corresponds more to watching a printed medium (reflecting light from the environment) than using a luminosity-based display.

Compared to LCDs and OLED displays, electrochromic displays exhibit a stronger contrast ratio, in particular when the ambient light intensity is high. Furthermore, electrochromic displays possess naturally a wide viewing angle, lower energy consumption and better light utilization efficiency. The electrochromic displays may thus be considered particularly advantageous for outdoor displays (ambient light) and for display-based reading (high contrast, less tiring to the human eye).

EP0084604, published in 1983, already discloses the use of an active matrix in electrochromic displays. The active matrix comprises a grid of conductive lines and a thin film transistors (TFTs), wherein said grid of conductive lines are disposed in rows and columns (X-Y matrix) so as to provide current flow selectively to any one of the TFTs and thereby configured to establish a voltage between the particular electrode that is in electric contact with the transistor and the counter electrode. In this configuration, the electrochromic material is deposited on the particular electrode electrically connected to the drain pad of the TFT elements. TFT panels or active matrices such as disclosed in this reference have been commercialized already since the 1980ies, where they were used to drive electroluminescent displays (EL) and LCDs. The scheme of an active matrix is also shown in Fig. 2A of US2007/0171148.

Full-color electrochromic displays can be produced by providing electrochromic materials of red, green and blue color, for example, on adjacent pixels, wherein each pixel (or sub-pixel) has an own electrode and can be addressed specifically by the active matrix. In this manner, a red-green-blue (RGB) additive color mixing system can be provided, wherein three-subpixels form a pixel. Such devices may comprise a grid barrier to isolate pixels from neighboring pixels.

Examples of electrochromic displays based in the RGB color mixing principle is disclosed in WO 2019/071733, where red, green and blue electrochromic materials are provided so as to form subpixels separated by an insulating separation part used so as to enable specific reduction/oxidation in the appropriate electrochromic (greed, red or blue) electrochromic material and probably to avoid cross-talk between subpixels. An electrolyte is not disclosed in this device, and it is difficult to understand how such a device can be manufactured and whether it is functional.

Another multi-color electrochromic display, according to the cyan-magenta-yellow (CMY) subtractive color mixing principle, is disclosed in US2005/0270619, which discloses pixel elements comprising superposed layers of yellow, magenta or cyan electrochrome layers. The materials in the different electrochrome layers require different voltages for inducing the colored state, so that, by adjusting the appropriate voltage across the pixel comprising the three electrochrome layers, it is possible to induce the colored state in one, two or all three of the three electrochrome layers.

US 8,654,431 discloses a method for manufacturing an active matrix electrochromic device. The method comprises immersing a substrate comprising the active matrix in a solution comprising a metal oxide and forming an electrochromic metal oxide semiconductor layer by an electrophoretic process. Organic electrochromic materials may also be adsorbed to a surface of the electrochromic semiconductor layer. This reference requires the presence of cells for isolating the electrolyte of any pixel electrode from the electrolyte of any other pixel electrode. To this end, bank or wall structures for isolating pixels are provided. The bank structures are also used for covering the active material-based transistors. This document is silent with respect to how the organic electrochromic material can be deposited.

US 2007/0171148 discloses the deposition of an organic electrochromic material (a 4,4'-bipyridinium derivative compound) as a self-assembled mono-layer deposited from solution. US 8,687,262 discloses deposition of an organic electrochromic compound by spin-coating.

More generally, for CMY subtractive color mixing, the stacking of three electrochromic layers and insulating layers in between is required as shown in US2005/0270619. The manufacturing process is rather complex. Also, the light intensity loss through the stacked layers diminishes the performance.

Regarding RGB additive color mixing, each pixel is composed of three subpixels, whose electrochromic layer should reflect or transmit red, green and blue light respectively. To fabricate full-color electrochromic devices using this color mixing principle, commonly a grid barrier to isolate the pixels and additional patterning process are suggested, usually including photolithography, for three different electrochromic materials. This renders the manufacturing process complex and expensive, too.

EP1347330A1 discloses an electrochromic display device including transparent pixel electrodes controlled by TFTs, a polymer layer made from an electrochromic material, and a solid electrolytic layer containing a coloring agent. In an example, this document discloses the electrodeposition of black polypyrole on ITO films.

US 2012/0154892 A1 discloses a subtractive full-colour EC display device that uses a liquid crystal material as part of the electrolyte.

US 5,189,549 discloses an electrochromic device comprising pairs of side-by-side arranged electrodes face up on a substrate. Two electrochromic materials deposited as a pair of electrodes are complementary. In the fabrication of these particular devices, bus bars and electrodes are deposited on a substrate, and encapsulating layer is deposited in several steps, so as to protect the bus bars from subsequent manufacturing steps. As electrochromic materials, this document generally uses the combination of various materials, including the deposition by electropolymerization of poly-3-methylthiophene in combination with a WO₃ electrode pair.

JP2003315840 A discloses a full-color EC display, in which a nanoporous semiconductor layer is deposited on electrodes, and an electrochromic (EC) dye is adsorbed on the nanoporous layer. As nanoporous semiconductor materials, principally oxide semiconductors are mentioned, but also compound-semiconductors are disclosed, such as CuGaS₂, which may be formed by electrolytic deposition. The EC dye is said to be adsorbed by any one of several methods, including electric-field polymerization.

An objective of the present invention is to provide a full-color EC device, which can be obtained in a simple manufacturing method involving few steps. It is also an objective to provide an EC device having a rapid response time and ideally avoiding cross-talk between neighboring electrodes or pixels, and avoiding the inconveniences of solid electrolytes. It is an objective to provide an EC device that can be implemented using an active matrix.

The present invention addresses the problems and objectives indicated above.

### Summary of the Invention

In one aspect, the present invention provides an electrochromic device as defined in claim 1.

In another aspect, the present invention provides a method for depositing an organic electrochromic material as defined in claim 9.

Further aspects and preferred embodiments of the invention are defined herein below and in the appended claims. Further features and advantages of the invention will become apparent to the skilled person from the description of the preferred embodiments given below. Hereinafter, preferred embodiments of the device of the invention are described, in order to illustrate the invention, without any intention to limit the scope of the present invention.

### Brief Description of the Drawings

**Figure 1** schematically shows an embodiment of an electrochromic display of the invention.
**Figure 2** schematically illustrates the deposition of organic electrochromic materials on pixel electrodes in accordance with an embodiment of the invention.

### Detailed Description of the Preferred Embodiments

The present invention relates to electrochromic devices. Preferably, the electrochromic device comprises and/or consists essentially of an electrochromic display.

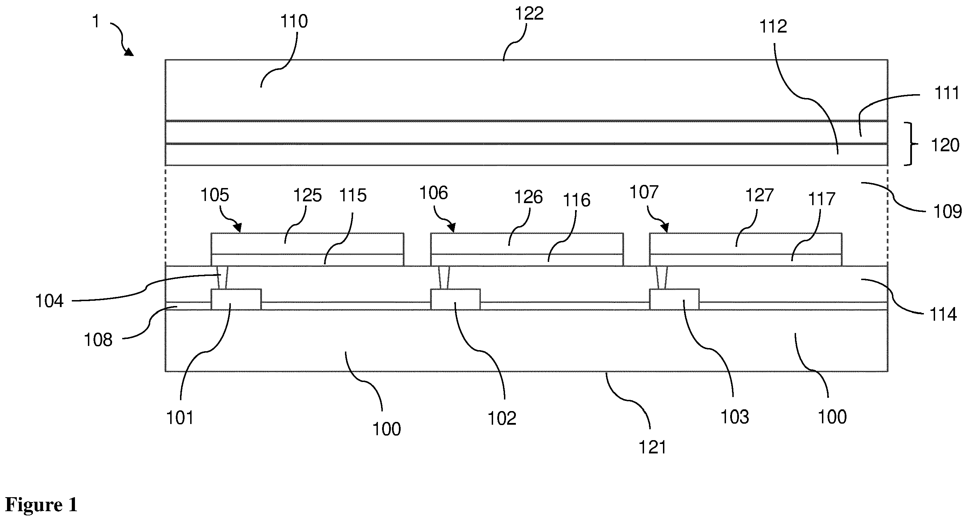

**Figure 1** schematically shows part an electrochromic display **1.** The display **1** is overall flat and comprises two first and second support structures or substrates **100, 110,** defining opposed first and second outside surfaces **121, 122.** One or both substrates **100, 110** may be at least partially transparent. The substrates may comprise glass and/or at least partially transparent plastics, for example. Of course, at least one of the two substrates needs to be transparent, such that the device can function as a display.

For the purpose of the present specification, the expression "comprising" is intended to mean "contains, amongst other". It is not intended to mean "consists only of".

Conducting lines **108** (generally referred to as "conductor") are provided on the inner surface of the first substrate **100.** The conducting lines are electrically conductive. The conductor electrically connects an external driver (not shown in Fig. 1) with active components **101-103** of the display.

The active components **101-103** and the conductor **108** are preferably electrically isolated and protected by an electrical insulating layer **114,** deposited on said active components and conductor **108.** The conductor **108** preferably provides a plurality of conducting lines forming a grid or matrix.

In an embodiment, the electrochromic device comprises an insulating layer **114** provided between said first substrate **100** and said subpixel electrodes **115-117,** wherein said active matrix comprises electrically conducting vias **104** extending across said insulating layer, wherein a via is provided to connect an individual active component **101, 102, 103** with an individual subpixel electrode **115, 116, 117.** Preferably, said pixel or subpixel electrodes are deposited on said insulating layer.

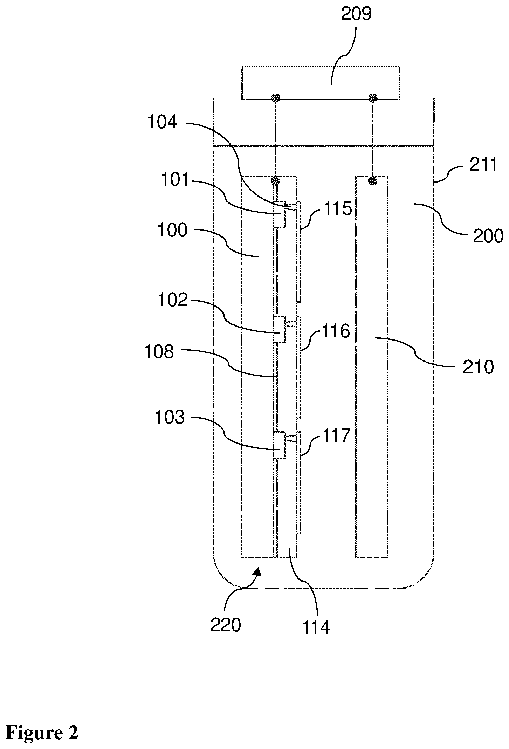

In an embodiment, the active components **101** are preferably transistors, for example thin film (TFTs) or circuits based mainly on TFTs. Together, all active components **101-103** may be an array of TFTs or TFT-based circuits electrically connected to the pixel electrodes **115-117** of the display. The conducting lines **108** and active components **101-103** preferably provide a grid, array or matrix that may be referred to as "an active-matrix". It is noted that the conducting lines **108** are preferably provided in such a manner that each active component **101-103** can be individually and/or independently addressed. Preferably, each active component **101-103** can be individually and/or independently provided with current and/or exposed to a voltage potential, as disclosed, for example, in EP0084604 (Fig. 3) and in US 2007/0171148 (Fig. 2A).

Typically, each active component **101-103** comprises a gate electrode, a source electrode and a drain electrode. Typically, the cathode of each array electrode **115-117** or of each pixel is connected to the drain electrode, preferably by via **104.** The via **104** is also conductive and may be considered as a conductive connection between the active components, provided on the first substrate, and the pixel electrodes **115-117,** provided on the insulating layer **114,** such that the via provides a connection between different layers of the device, in particular between the opposed surfaces of the insulating layer **114.**

It is noted that the term "active-matrix" should not be confused with the notion of electrochromic displays being "passive displays". The latter expression refers to the fact that electrochromic displays generally does not generate light, but comprise electrochromic materials that may be controlled so as to have a particular color and therefore reflect light of a particular color. The term "active-matrix" refers to the electronic matrix comprising conducting lines **108** and active components **101-103** that are used to supply current to array electrodes and/or to pixels and/or to expose pixels to a voltage potential.

In an embodiment, the grid, array and/or matrix comprises an active matrix.

The active matrix preferably comprises active components **101-103,** wherein an active component **101, 102, 103** is provided for each array electrode **115-117** and/or for each of said pixels **105-107,** wherein said one active component **101-103** is electrically connected to one pixel electrode **115-117** and wherein a predetermined pixel electric potential is established via said active component **101.**

In an embodiment, said grid, array and/or matrix comprises thin film transistors (TFTs), wherein every pixel or subpixel of said electrochromic device comprises at least one TFT for controlling current flow towards or from a pixel or subpixel electrode.

For the purpose of the present specification, the term "pixel electrode" is exchangeable with the terms "array electrode" and the two terms refer to the same structural features **115-117.** Similarly, the term "array electrode" may also replace the term "subpixel electrode" as disclosed elsewhere in this specification.

The display shown in Fig. 1 preferably comprises a plurality of pixels **105-107.** Preferably, each pixel comprises a pixel electrode **115-117** and an electrochromic material **125-127.** The electrochromic material preferably comprises or consists of an organic electrochromic material **125-127.**

Preferably, said organic electrochromic material **125-127** is in electric contact with said pixel electrode **115-117.**

For the purpose of the present specification, the expression "electrically connected" or "in electric contact" means that steady current (electrons, holes) flow occurs between the items that are electrically connected under fixed potential difference.

In an embodiment, the pixel electrodes **115-117** are preferably at least partially transparent to visible light. In an embodiment, the pixel electrodes **115-117** comprise and/or consist essentially of transparent conductive materials, preferably transparent conductive oxides (TCOs) which may be selected, for example, from the group consisting of indium tin oxide (ITO), fluorine doped tin oxide (FTO), antimony-doped tin oxide (ATO), tin oxide (SnO), zinc oxide (ZnO), aluminium doped zinc oxide (AZO) or indium zinc oxide (IZO).

In a preferred embodiment, the pixel electrodes **115-117** also comprise a nanostructured layer, preferably deposited on and/or on top of said conductive materials, preferably transparent conductive materials as listed above (ITO; FTO, etc). Preferably, the organic electrochromic materials **125-127** are deposited on said nanostructured layer. The nanostructured layer may comprise a metal oxide material. The nanostructured layer may comprise a semiconductor and/or conducting material. The nanostructure layer may be nanoporous. Preferably, the nanostructured layer may be selected from TCOs for example as exemplified above (ATO, ITO, SnO, ZnO, etc), and also from titanium dioxide (TiO₂).

In an embodiment, a first pixel **105** comprises a first pixel electrode **115** and a first electrochromic material **125,** a second pixel **106** comprises a second pixel electrode **116** and a second electrochromic material **126,** a third pixel **107** comprises a third pixel electrode **117** and a third electrochromic material **127,** and so forth, the nth pixel comprising an nth pixel electrode and an nth electrochromic material. Preferably, said electrochromic material comprises or consists of an organic material, as described in further detail elsewhere in this specification.

When considering the overall electrochromic device comprising many pixels and/or subpixels, reference numerals **105, 106, 107** may also be used to refer to first, second and third portions of pixels or subpixels, respectively. By analogy, reference numerals **115, 116, 117** may be understood as first, second and third portions of pixel (or subpixel or array) electrodes.

The electrode **115-117** of each pixel **105-107** is electrically connected with a vial **104** to the active component **101-103** provided for the specific electrode. For example, the through vials **104** cross the protective and/or insulating layer **114,** so as to electrically connect an active component with its corresponding pixel electrode.

While Fig. 1 shows three pixels **105-107,** it is understood that the device of the invention preferably comprises many more pixels. Three pixels are shown for the purpose of illustration.

In an embodiment, the electrochromic materials **125-127** are provided on top of the corresponding pixel electrode **115-117,** that is the first electrochromic material **125** is on top of the first pixel electrode 115, and so forth.

In an embodiment, the pixel electrodes **115-117** are provided, for example deposited, in the forms of layers.

In an embodiment, the electrochromic materials **125-127** are provided, for example deposited, as layers.

In an embodiment, the electrochromic materials **125-127** are provided, preferably deposited, so as to cover the pixel electrode of the corresponding pixel **105-107.** Preferably, the pixel electrode is covered completely by said electrochromic material. Preferably, the pixel electrode materials **115-117** are not in contact with the ion transport material **109.** If the pixel electrode is completely surrounded or covered by the electrochromic material, the efficiency of charge injection for colouring or bleaching may be higher. However, the device should also work if the pixel electrode is not completely covered and/or comprises surfaces that are in contact with the ion transport layer.

As can be understood, the electrochromic material associated with a corresponding pixel electrode is in electrical contact with that pixel electrode, preferably only with the corresponding pixel electrode. For example, the first electrochromic material **105** is in electrical contact, preferably in physical contact, with the first pixel electrode **115,** and so forth.

As can be understood, the electrochromic material associated with a corresponding pixel electrode is preferably in direct physical contact with that pixel electrode, preferably only with the corresponding pixel electrode. This is preferably the consequence of the deposition of the electrochromic material directly on the corresponding pixel electrode, as will be described in more detail elsewhere in this specification.

The device **1** of the invention preferably comprises at least one counter electrode **120.** The counter electrode **120** is preferably in contact with the second substrate **110.** Preferably, at least part of the counter electrode is directly deposited on the inner surface of the second substrate **110.**

In an embodiment, the at least one counter electrode **120** is preferably at least partially transparent to visible light. In an embodiment, the at least one counter electrode **120** comprises and/or consists essentially of transparent conductive materials, such as transparent conductive oxides (TCOs), which may be selected, for example, from the group consisting of indium tin oxide (ITO), fluorine doped tin oxide (FTO), antimony-doped tin oxide (ATO), tin oxide (SnO), zinc oxide (ZnO), aluminium doped zinc oxide (AZO) or indium zinc oxide (IZO). Preferably, the conductive material forms a layer **111** of the device of the invention, preferably on the inner surface of said second substrate **110.**

In a preferred embodiment, and as shown in Fig. 1, the counter electrode **120** comprises a comprises a conductive layer **111.**

In a preferred embodiment, and as shown in Fig. 1, the counter electrode **120** comprises an ion storage layer **112.**

In a preferred embodiment, the counter electrode **120** comprises a conductive layer **111** and a ion storage layer **112.**

The device **1** of the invention preferably comprises at least one ion storage layer **112.**In an embodiment, the ion storage layer **112** is deposited on the conductive layer **111.** In an embodiment, the ion storage layer **112** comprises or consists essentially of a porous structure, preferably a nanoporous and/or nano-crystalline structure. Preferably, the porous structure is such that the electrolyte can percolate into the body, and ions can gather at the surface of the porous structure, preferably also inside the body of the ion storage layer. In other embodiments, the ion storage layer may be a compact and/or non-porous layer. It is expected that a compact ion storage layer has a smaller overall surface available for ions to gather and therefore a lower overall storage capacity. However, devices comprising compact ion storage layers do also work.

Preferably, the ion storage layer **112** is provided so as to have the appropriate ion storage capacity. The ion storage layer may be selected from the group consisting of: of conductive inorganic materials with high surface area, for example, mesoporous structure, nanowire and nanotubes. The ion storage layer **112** may typically comprise or consist essentially of a doped metal oxide, such as antimony tin oxide (ATO). The ion storage layer **112** may also be selected from the group of conductive polymers with porous structure, or from the group of conductive hybrids of inorganic and organic materials.

In an embodiment, the device **1** of the invention preferably comprises an ion conducting material **109** for transporting ions between said pixels **105-107** and said one or more counter electrode **120.** The ion conducting material **109** is preferably provided for enabling and/or mediating transport of ions, such as charged molecules or other (e.g. metal) ions. The ions may be cations or anions. The ions may be organic or inorganic.

Accordingly, the ion conducting material **109** is preferably an electrolytic layer and/or an electrolyte, such as an electrolyte comprising dissolved ions and/or an ionic liquid. In preferred embodiments, the ion conducting material **109** may be selected, for example, from liquid electrolytes, gel-like electrolytes, ionic liquids, and eutectic melts.

In an embodiment, the ion transport material **109** comprises one or more cations selected from lithium, sodium, potassium, alkylimidazolium, alkylpyridinium, alkylphosphonium alkylammonium and tetra-n-buthylammonium. Preferably, said alkyl is C1-C20 alkyl, more preferably C1-C10 alkyl, most preferably C1-C4 alkyl, for example methyl.

In an embodiment, the ion transport material **109** comprises a salt of any one of the aforementioned cations.

In an embodiment, the ion transport material **109** comprises one or more anions selected from bistriflimide or TFSI ([(CF₃SO₂)₂N]⁻), perchlorate (ClO₄⁻), tetrafluoroborate (BF₄⁻), or hexafluorophosphate (PF₆-).

In an embodiment, the ion transport material **109** comprises a salt of any one of the aforementioned anions.

In an embodiment, the ion transport material **109** comprises one or more salts comprising at least one of the aforementioned anions and at least one of the aforementioned cations.

In a particular embodiment, the ion transport material **109** comprises one or more selected from LiTFSI, LiClO₄, LiBF₄ or LiPF₆.

In an embodiment, the ion transport material **109** comprises at least one solvent. The solvent may be selected, for example, from propylene carbonate, ethylene carbonate, tetrahydrofuran, dioxane, dimethyl sulfoxide, dimethylformamide, acetonitrile sulfolane, γ-butyrolactone and solvent mixtures comprising one or more of the aforementioned solvents. It is noted that in certain electrolytes, such as ionic liquids (also known as ionic melts or liquid salts), a separate solvent may be absent, as the ionic liquid functions as solvent and also provides the ions for ion transport.

In an embodiment, the ion transport material **109** comprises at least one solvent, at least an anion and at least a cation. In an embodiment, the ion transport material **109** comprises at least one or more selected from a salt of at least one of the aforementioned cations and a salt of at least one of the aforementioned cations, and, optionally, a solvent preferably selected from the aforementioned solvents.

In an embodiment, the electrolytic layer **109** can be a liquid, a gel, or a solid

In a preferred embodiment, the electrolytic layer **109** preferably comprises and/or consists essentially of a liquid crystal or ionic liquid crystal. Such liquid crystals and/or ionic liquid crystals are advantageous as they may contribute to reducing crosstalk effect between pixels.

In an embodiment, the ion conducting material **109** is provided within a common space, wherein several pixels and/or subpixels **105-107** are provided preferably within said common space and/or are in contact with a continuous and/or homogenous ion conducting material **109,** preferably within said continuous space. This is illustrated in Fig. 1, where reference numeral **109** also refers to said common space, as this space is filled with the ion conducting material **109,** preferably said electrolyte as disclosed herein.

The ion conducting material preferably has consistent and/or invariant electric properties within said common, continuous space.

In an embodiment, the device of the invention comprises an insulating layer **114** for electrically separating the ion conducting material **109** from said grid or matrix comprising electrically conducting lines **104, 108** and/or from said active components **101-103,** if present.

Preferably, the device of the invention does not comprise separation walls or separation parts for separating the pixels and/or subpixels. Preferably, the device lacks separation walls, parts, borders and/or regions parts for separating the pixels and/or subpixels. Such separations are provided, in the prior art, for electrically separating adjacent pixels and/or adjacent subpixels, essentially for avoiding cross-talk between electrodes. The above separation elements may be used in the prior art to prevent a continuous ion conducting material that is in contact with different, e.g. neighboring pixels.

This feature, amongst others, distinguishes the device of the invention from prior art devices, such as disclosed in WO2019/071733, US 8,654,431, US2017/0192334, and others, in which pixels (or subpixels) are separated by separation walls and each pixel (or subpixel) comprises an own, confined electrolyte.

Preferably, a continuous conducting material **109** (e.g. electrolyte) is in physical contact with several different, for example neighbouring pixels and/or neighbouring array electrodes **115-117.** In an embodiment, the ion conducting material **109** (e.g. electrolyte) is in physical contact with the electrochromic materials **125-127** deposited on different, preferably neighbouring array electrodes **115-117.** Cross-talking during operation of the device is preferably prevented through the use of the ion transport material **109.**

In a preferred embodiment, the ion conducting material **109** comprises a liquid crystal. US 8,687,262 discloses the use of liquid crystals so as to avoid the cross-talk between pixels. In an embodiment, the ion transport material **109** comprises an electrolyte and a low-molecular liquid crystal material as disclosed in US 8,687,262.

Although the conducting materials **105-107** are indicated to be pixel electrodes, it is correct to consider the combination of a pixel (or subpixel or array) electrode **115** (and **116-117)** and the electrochromic material **125 (126-127)** deposited thereon together as a first electrode or pixel electrodes. In other words, the term pixel used herein with respect to the structure encompassed by reference numerals **105-107** may also be understood as pixel electrode or first electrode, since the whole structure **105** may be considered as an electrode.

One may also consider all pixels **105-107** as a whole (including up the n pixels not shown) as the first electrode and the combination of layers **111** and **112** as counter electrode **120.** The invention thus encompasses different wordings or nomenclature that may be used in the literature for designating the electrode and counter electrode.

The invention also encompasses the possibility of providing an electrochromic material on or in electric and/or physical contact with the counter electrode **120,** more specifically with the ion storage layer **112.** For example, electrochromic materials deposited on or as part of the counter electrode **120** may be selected from inorganic and/or organic materials as disclosed in US 2007/0192334, for example. An electrochromic material may also be part and thus comprised in the counter electrode. Such an electrochromic material is preferably different from the electrochromic material **125-127** generally disclosed in the present application as being associated with the pixel electrodes **115-117.**

In a preferred embodiment, the electrochromic material **125-127** comprises or consists essentially of one or both selected from the group consisting of: an electrodeposited organic electrochromic material and an organic polymer electrochromic material.

In an embodiment, the electrochromic material **125-127** comprises an organic or hybrid material comprising one or more selected from said electrodeposited organic electrochromic material and/or organic polymer electrochromic material. For the purpose of the present specification, a "hybrid material" is a material comprising one or more inorganic and one or more organic materials. In the case of hybrid materials, the organic electrochromic material preferably provides at least one organic component of said hybrid material.

In an embodiment, the electrodeposited organic electrochromic material and/or the organic polymer electrochromic material is preferably selected from doped and/or undoped organic materials. If the organic material is doped, it may comprise non-organic components or additives, such as metal ions, organometallic materials and composite materials, for example.

In a preferred embodiment, the electrodeposited organic electrochromic material and/or the organic polymer electrochromic material is obtained by electropolymerization.

In an embodiment, said electrodeposited organic material comprises one or more selected from electrodeposited heterocycles. Heterocycles may be aromatic or not. Examples of heterocycles are viologen, thiophene, pyridine, anthraquinone, imides, pyridine, and derivatives of the above, in particular compounds comprising these structures and optionally further comprising substituents as detailed herein below. The electrochromic material may comprise an organic material obtained by the electropolymerization of a heterocyclic compound and their derivatives. The electrochromic material may comprise a polymeric heterocycle.

In a preferred embodiment, said electrodeposited organic material **125-127** comprises one or more selected from the group consisting of: electrodeposited viologen, electrodeposited triphenylamine, electrodeposited thiophene, electrodeposited 3,4-ethylenedioxythiophene, electrodeposited pyridine, electrodeposited aniline, electrodeposited imides, electrodeposited aromatic ketones, electrodeposited anthraquinone, electrodeposited amides, electrodeposited norbornene-based compounds, electrodeposited carbazoles, electrodeposited thiocarbazoles, electrodeposited pyrol, and electrodeposited derivatives of the indicated compounds. Derivatives of the indicated compounds include in particular the indicated compounds in which one or more hydrogen may optionally be substituted with substituents as specified herein below, for example.

In an embodiment, the electrochromic materials **125-127** can be formed through electropolymerization of, for example, viologen-, triphenylamine-, thiophene-, 3,4-ethylenedioxythiophene-, pyridine-, pyrol-, aniline-, imide-, aromatic ketone, anthraquinone-, amide-, norbornene-, carbazole-, and thiocarbazole, including derivatives of any one or more of the aforementioned. Derivatives of the indicated compounds include in particular the indicated compounds in which one or more hydrogen may optionally be substituted with substituents as specified herein below.

In an embodiment, the electrochromic materials **125-127** can be formed through electropolymerization of, for example, viologen-based compounds, triphenylamine-based compounds, thiophene-based compounds, 3,4-ethylenedioxythiophene-based compounds, pyridine-based compounds, pyrol-based compounds, aniline-based compounds, imide-based compounds, aromatic ketone-based compounds, anthraquinone-based compounds, amide-based compounds, norbornene-based compounds, carbazole-based compounds, and thiocarbazole-based compounds.

The expression "-based compounds" or "-based organic material" as used in this specification meant to encompass the structure of the indicated compound or material as well as derivatives thereof, which derivatives comprise the basic structure of the indicated compound or material. For example, such compounds may further comprise one or more optional substituents as indicated herein below. For example, the expression "viologen-based compounds" preferably encompasses compounds that comprise the basic structure of viologen, but which may further comprise one or more substituents that may affect the color and/or electrochromic characteristics or properties of the compound.

In a preferred embodiment, said polymerized organic material **125-127** comprises one or more selected from the group consisting of polyviologen, polytriphenylamine, polythiophene, poly(3,4-ethylenedioxythiophene) (PEDOT), polypyridine, polypyrol, polyaniline, polyimides, polymeric aromatic ketones, polyanthraquinone, polyamides, polynorbornene, polycarbazoles, polythiocarbazoles, and their derivatives.

In an embodiment, said polymerized organic material **125-127** comprises one or more selected from the group consisting of a polyviologen-based organic material, a polytriphenylamine-based organic material, a polythiophene-based organic material, a polypyridine-based organic material, a polypyrol-based organic material, a polyaniline-based organic material, a polyimide-based organic material, a polymeric aromatic ketone-based organic material, a polyanthraquinone-based organic material, a polyamide-based organic material, a polynorbornene-based organic material, a polycarbazole-based organic material, and a polythiocarbazole-based organic material.

An example of a polythiophene-based organic material is a poly(3,4-ethylenedioxythiophene) (PEDOT)-based organic material.

As indicated derivatives of the aforementioned materials are also encompassed. For example, the expression "electrodeposited viologen" encompasses an electrodeposited derivative of viologen comprising the basic structure of viologen, and furthermore one or more optional substituents. The expression "polyviologen" encompasses a polymer of a monomers that comprise the basic structure of viologen and which monomers may be derivatized viologen so as to comprises one or more optional further substituents, for example. For example, US20070171148 discloses derivatives of viologen, where substituents of the viologen basic structure may be selected so as to provide a viologen derivative having particular color characteristics.

Optional substituents of the above referenced organic materials, in particular said exemplified electrodeposited materials, said polymerized organic materials may be selected from organic substituents comprising from 1-50 carbons and 0-20 heteroatoms, preferably 1-20 carbons and 0-10 heteroatoms, most preferably 1-10 carbons and 0-5 heteroatoms.

In some embodiments the substituents may be selected from aliphatic and aromatic substituents, esters and amines of aliphatic and aromatic moieties, wherein in said aliphatic or aromatic substituent or moiety one or more hydrogens are optionally replaced independently by one or more selected from phosphonate (-PO(OH)₂), boronic acid (-B(OH)₂), -OH, - COOH, -NH₂, -NO₂, aminoxide (-N⁺(R)₂-O⁻), halogen, and -(CH₂)ₙ-Si(OR₃)₃. R and R₃ are independently selected from C1-C10 alkyl, preferably C1-C5 alkyl.

It is noted that said replaced hydrogen may be a hydrogen attached to a carbon or to a heteroatom, such as nitrogen of the basic organic material as mentioned above, for example. The latter applies preferably if the substituent comprises a C-atom, which is connected to said heteroatom.

In an embodiment, the substituents are selected from linear or branched alkyls, alkenyls, alkylaryls, and alkylarylalkyl (e.g. alkylphenylalkyl, such as alkylbenzyl), in which one or more hydrogens are optionally replaced independently by one or more selected from - PO(OH)₂, -B(OH)₂, -OH, -COOH, -NH₂, -NO₂, aminoxide (-N⁺(R)₂-O⁻), halogen, and - (CH₂)ₙ-Si(OR₃)₃. R and R₃ are independently as defined above.

In an embodiment, optional substituents of the above indicated organic materials may be independently selected from:
C₁₋₁₀ alkyl, N-oxide, dimethylamino, acetonitrile, benzyl, phenyl, benzyl, which is mono- or di-substituted by nitro; phenyl, which is mono- or di-substituted by nitro, and from the substituents of formulae (1)-(9): 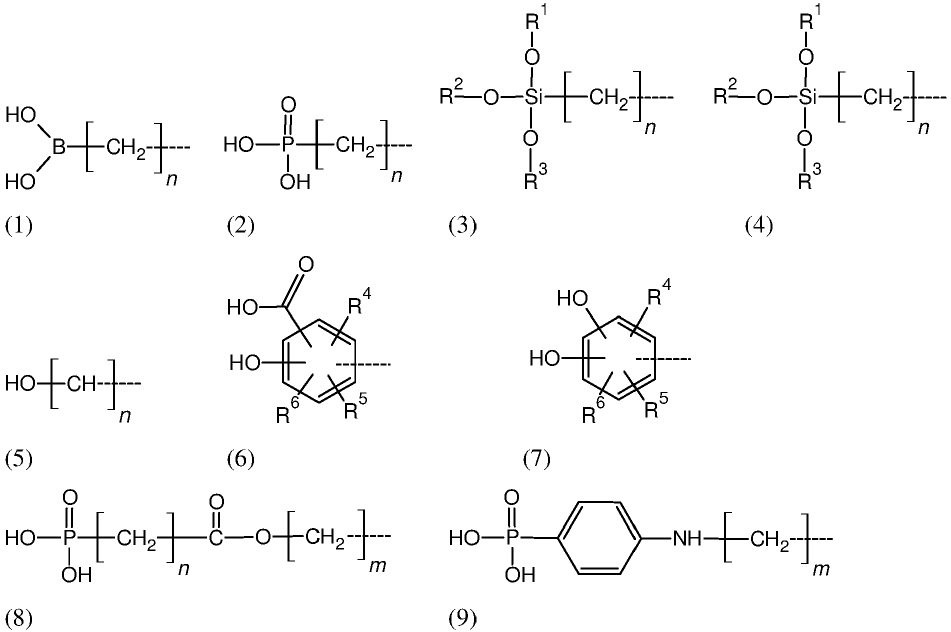
wherein n and m are, independently, an integer of 1-10,
R₁-R₃ are independently selected from C1-C10 alkyl,
R₄-R₆ are independently selected from hydrogen, C1-C10 alkyl, C2-C10 alkylene, aryl, substituted aryl, halogen, nitro, and -OH,and wherein the dotted line represents the single bond by which the substituent is connected to the basic structure of the indicated organic material, compound or monomer, as applicable.

Substituent (8) is an example of a substituent comprising an ester comprising aliphatic and aromatic moiety.

The electrochromic material preferably has a particular color depending on the oxidation status of the material. In some embodiments, the electrochromic material has no color when being in a first oxidation (or redox) state, and has a particular color (preferably red, green or blue) when being in a second oxidation state. In the device of the invention, the oxidation state of the electrochromic material is preferably controlled by the voltage to which the material is exposed via the arrangement of pixel electrodes and the counter electrode. One may also say that the flow of current through via **104,** is preferably controlled or adjusted by the active components **101-103.** The current through via **104** is preferably used to oxidize and/or reduce the electrochromic material so as to give it the color that it is wished to have at a particular moment. The current flow is preferably the result of the voltage applied by the pixel electrode and counter electrode arrangement within the device. The ion flow within the ion transport material **109** preferably equilibrates the accumulated charges at both electrodes. These electrodeposited and/or polymeric organic electrochromic materials are preferably deposited in accordance with the method of the invention, as will be disclosed in some more detail elsewhere in this specification.

The device of the invention is a full-color electrochromic device. Preferably, the device is a display.

In an embodiment, the color-characteristics of the device are provided at least in part by the presence of organic electrochromic materials of different color. In a preferred embodiment, neighbouring pixels, preferably subpixels, comprise electrochromic materials of different color, preferably of the colors red, green and blue (RGB colors).

The device of the invention is based on RBG color mixing. Referring to Fig. 1 in view of the color device, one of pixels **105-107** preferably comprises a red electrochromic material, one preferably comprises a green electrochromic material and one a blue electrochromic material. As mentioned above, said electrochromic materials preferably comprise and/or consist essentially of polymeric organic electrochromic materials and/or electrodeposited organic electrochromic materials.

In a particular embodiment, a first pixel **105** comprises a red organic electrochromic material **125,** a second pixel **106** comprises a green electrochromic material **126,** and a third pixel **107** comprises a blue organic electrochromic material **127.**

In a full-color device, pixels **105-107** may be considered as subpixels, which together provide one pixel and/or color, preferably by additive RBG color mixing. In this case, subpixels **105-107** form one pixel of the electrochromic device. In this case, each subpixel, comprises a subpixel electrode **115-117,** for example a first subpixel **105** comprises a first subpixel electrode **115,** a second subpixel **106** comprises a second subpixel electrode **116,** and a third subpixel **107** comprises a third subpixel electrode **117.**

Preferably, said subpixels **105-107** forming a pixel have the structure and/or are made from the materials as described herein above. For example, the subpixel electrodes **115-117** may comprise a nanostructured layer as detailed above. Preferably, the electrochromic materials of said subpixels comprise an organic electrodeposited and/or an organic polymeric electrochromic material, preferably selected from the materials set out elsewhere in this specification.

The electrochromic device **1** is a full-color electrochromic device, comprising pixels comprising first, second and third subpixels **105, 106, 107,** each subpixel comprising a subpixel electrode **115-117** and each first, second and third subpixel comprising an organic electrochromic material **125-127** having a different color.

The skilled person will understand that the subpixel electrodes **115-117** of the subpixels may be and preferably are identical and/or made from the same material. In an embodiment, the electrochromic materials **125-127** is the main or sole difference between the subpixels **105-107.** It is noted that the (array or pixel) electrodes **115-117** may be considered to be part of the active matrix. Therefore, the (array or pixel) electrodes **115-117** are preferably part of both, the pixels (or subpixels) **105, 106, 107** and of the active matrix.

In a preferred embodiment of the electrochromic device **1,** said first subpixel **105** comprises an organic electrochromic material **125** having a red color when exposed to a particular voltage, said second subpixel **106** comprises an organic electrochromic material **126** having a green color when exposed to a particular voltage, and said optional third subpixel **107** comprises an organic electrochromic material **127** having a blue color when exposed to a particular voltage.

In a preferred embodiment, three subpixels **105, 106, 107** are provided adjacently, next to each other. Preferably, electrochromic materials of different color are provided next to each other, on spaced-apart subpixels. Preferably, said subpixels are not in direct physical contact with each other. Preferably, the different electrochromic materials (having also different color characteristics) are not in direct physical contact and are not superimposed. Preferably, this embodiment distinguishes the device of the invention from devices comprising superimposed electrochromic materials, as shown, for example, in US2005/0270619.

Preferably, said spaced-apart subpixels (or pixels) **105-107,** and thus the corresponding electrochromic materials **125-127** are laterally and/or horizontally spaced apart, where horizontal is defined by the plane of the overall generally flat electrochromic device. More specifically, one or both substrates **100** and **110** preferably extend in planes that are parallel to horizontal. Preferably, the pixels (or subpixels) **105-107** lie in or on a same horizontal plane. Preferably, the electrochromic materials **125-127** of different, in particular neighbouring, pixels or subpixels, as the case may be (i.e. subpixel in color devices) lie in a same horizontal plane. In an embodiment, the majority, preferably all pixels and/or subpixels of the device are provided in and/or aligned in the same plane.

Preferably, neighboring subpixels of the different RBG colors are provided side-by side on the insulting layer. Preferably, three subpixels providing together a color by RBG color mixing are aligned in the same plane, which plane is substantially parallel with respect to at least one of the two opposed surfaces **121, 122** of the device. For example, the plane of the subpixels is defined by the surface of the insulating layer on which the pixel or subpixel electrodes are deposited.

In a preferred embodiment, said ion conducting material **109** is provided within a common space, wherein at least three separate subpixels **105, 106, 107,** are provided preferably within said common space and/or are in contact with a continuous ion conducting material **109.**

In a preferred embodiment, said grid or matrix comprises an active matrix comprising active components **101-103,** wherein an active component **101, 102, 103** is provided for each of said subpixels **105-107,** wherein said one active component **101-103** is electrically connected to one subpixel electrode **115-117,** and wherein a predetermined subpixel electric potential is established via said active component **101.**

The device of the invention preferably comprises an external driving component and/or terminal (not shown in Fig. 1). This driving component is configured to provide the appropriate voltage potential independently with respect to each pixel or subpixel, so as to create the oxidations states of the electrochromic materials that will make it possible to overall produce an image by way all pixels or subpixels together.

In an embodiment, the first substrate **100,** the electrical insulating layer **114,** the pixel electrodes **115-117,** the electrolytic layer **109,** the second substrate **110,** the counter electrode **111,** and the ion storage layer **112** may be transparent, providing a transparent electrochromic display, so that the users can perceive the images from both sides of the display and keeping the object behind the display visible.

In another embodiment, the first substrate **100,** the electrical insulating layer **114,** the pixel electrodes **115-117,** and the electrolytic layer **109** may be transparent, and the ion storage layer **112** may be diffusively reflective, providing a reflective electrochromic display with white background. The users can perceive the images from the pixel electrode side **121.**

In yet another embodiment, the second substrate **110,** the counter electrode **111,** and the ion storage layer **112,** and the electrolytic layer **109** may be transparent, and the electrical insulating layer **114** may be diffusively reflective, providing a reflective electrochromic display with white background. The users can perceive the images from the counter electrode side (side **122).**

The invention also relates to a method for depositing an organic electrochromic material **125-127** on pixel electrodes **115-117** of an electrochromic device. The method of the invention is illustrated in **Figure 2****.** The organic electrochromic materials may be the same materials as disclosed elsewhere in this specification. The array electrodes **115-117** may also be pixel or subpixel electrodes, for example in a color electrochromic device, such as a color display, as disclosed elsewhere in this specification.

The method of the invention preferably comprises providing a grid or matrix comprising electrically conducting lines and/or vias **104, 108** and a plurality of pixel electrodes **115-117,** wherein there is a specific via **104** for each of said pixel electrode **115-117.** Active matrices that may be used for the purpose of the method of the invention are now commercially available and have been disclosed, for example, in EP0084604 and US20070171148. In Fig. 2, the active matrix is indicated with reference numeral **220.** The active matrix is preferably the active matrix as contained in the device of the invention, for example as shown in Fig. 1. Therefore, reference numerals **100-108, 114-117,** which refer to components or constituents of the active matrix **220,** preferably have the same meaning as disclosed above with respect to Fig. 1. The array electrodes **115-117** may also be seen as part of the active matrix.

The method of the invention preferably comprises immersing said grid or matrix in a solution **200.** In Fig. 2, the active matrix **220** has been immersed in chemical bath **200.**

The method of the invention preferably comprises adding entities of an organic electrochromic material to said solution. Said entities are preferably organic molecules that can be deposited by electrodeposition and/or that can be polymerized by electropolymerization, preferably both. Preferably, said entities are monomers of said organic electrochromic materials **125-127.**

In an embodiment, said entities of an organic electrochromic material are the monomers of one or more selected from the group consisting of: polyviologen, polytriphenylamine, polythiophene, polypyridine, polypyrol, polyaniline, polyimides, polymeric aromatic ketones, polyanthraquinone, polyamides, polynorbornene, polynorbornene-based compounds, polycarbazoles, polythiocarbazoles, and their derivatives.

In an embodiment, the monomers of these polymers may carry the optional substituents as disclosed elsewhere in this specification, which substituents may be used to adjust the electrochromic characteristics of the resulting polymer. As indicated herein above, such substituents may be selected from organic substituents comprising from 1-50 carbons and 0-20 heteroatoms, preferably 1-20 carbons and 0-10 heteroatoms, most preferably 1-10 carbons and 0-5 heteroatoms.

As indicated herein above, such substituents may be selected from aliphatic and aromatic substituents, esters and amines of aliphatic and aromatic moieties, wherein in said aliphatic or aromatic substituent or moiety one or more hydrogens are optionally replaced by one or more selected from phosphonate (-PO(OH)₂), boronic acid (-B(OH)₂), -OH, -COOH, and -(CH₂)ₙ-Si(OR₃)₃. R₃ is an C1-C10 alkyl, preferably C1-C5 alkyl. Further embodiments as detailed herein above with respect to the substituents apply to the substituents contained on the monomeric moieties (e.g. C₁₋₁₀ alkyl, N-oxide, dimethylamino, acetonitrile, benzyl, phenyl, benzyl, which is mono- or di-substituted by nitro; phenyl, which is mono- or di-substituted by nitro, and from the substituents of formulae (1)-(9), and so forth.

It is noted that the entities may be added to the solution before, after or at the same time of immersing said grid or matrix **220** in the solution **200.** The solution may be a solution that already contains the entities of an organic electrochromic material. The skilled person understands that the goal is to achieve the configuration schematically illustrated in Fig. 2, whereby the order of adding components is generally not relevant.

This also applies for immersing a counter electrode **210** in said solution **200** in accordance with the method of the invention.

The previous method features may also be referred to more generally as providing a recipient **211** comprising an active matrix **220,** a counter electrode **210** and a solution **200** comprising entities (preferably monomers) of an organic electrochromic material, as illustrated in Fig. 2.

The method of the invention preferably comprises applying an electric potential between some or all of said plurality of pixel electrodes **115** and said counter electrode **210,** thereby providing the deposition of said entities of said organic electrochromic material on said pixel or subpixel electrode **115.** Preferably, the active matrix **220** is electrically connected to the external driver **209.** Preferably, the counter electrode **210** is also electrically connected to the external driver **209** or possibly to another power source or to an electrode terminal of the active matrix, as illustrated in US 8,654,431 (Fig. 5), for example.

The driver **209** is preferably configured to be suitable to control the current flow to the pixel electrodes **115-117** and/or to the counter electrode **210,** and/or to establish a desired voltage potential between said pixel electrodes **115-117** and/or to the counter electrode **210.** Preferably, the driver **209** can address independently and individually each active component **101, 102, 103** and thus each pixel or subpixel electrode **115, 116, 117.** In another embodiment, the driver **209** can address independently and individually one group **115** out of several groups **115-117** of pixel or subpixel electrodes.

By applying a voltage potential between all pixel electrodes **115-117** and the counter electrode **210** in said solution, the organic entities will migrate to the pixel electrodes **115-117** and be electrodeposited and/or electropolymerized on all said pixel electrodes.

In a preferred embodiment, said entities of an organic electrochromic material are monomeric entities, and wherein an organic electrochromic material is formed upon deposition of said monomeric moieties on said pixel electrodes **115.** Preferably, a polymeric organic electrochromic material is formed upon deposition of said monomeric moieties.

In a preferred embodiment, the method of the invention comprises the electrodeposition and/or electropolymerization of said entities of said organic electrochromic material on said pixel electrode **115.**

Preferably, the polymer is preferably formed *in situ*, on the respective pixel or subpixel electrode, as is preferably determined by the driving device.

In a preferred embodiment, the method comprises providing an external driving device **209,** configured to apply said electric potential between said plurality of pixel electrodes **115** and said counter electrode **210,** thereby providing the deposition of said entities of said organic electrochromic material on said plurality of pixel electrodes **115.**

Preferably, the electrochromic characteristics of the electrodeposited organic electrochromic material and/or an organic polymer electrochromic material **125-127** are the characteristics of the material obtained by the electrodeposition and/or electropolymerization. The organic entities (e.g. monomers) that are added to the solution may or may not have electrochromic characteristics.

In an embodiment, the method of the invention is intended for the deposition of different organic electrochromic materials on different pixel electrodes, for example on different subgroups of pixel electrodes. In this manner, it is possible to deposit electrochromic materials for color electrochromic devices, for example multi-color devices and even full-color electrochromic devices, such as the RGB display disclosed in Fig. 1. For example, the pixel may be grouped in subpixels, wherein a certain number of subpixels form one pixel, preferably three-subpixel forming one pixel, for example in accordance with the additive RGB principle discussed with respect to Fig. 1. In accordance with the invention, electrochromic material of a particular color may deposited on part of the pixel electrodes only, preferably on the subpixel electrodes of a particular color (red, green or blue, for example).

In a preferred embodiment of the method, said grid, array or matrix comprises a plurality of subpixel electrodes **115-117,** wherein said method comprises providing an external driving device **209** configured to apply said electric potential between a first portion of said plurality of subpixel electrodes and said counter electrode **210,** thereby providing the deposition and/or electropolymerization of said entities of said organic electrochromic material only on said first portion of said plurality of subpixel electrodes **115.**

In a preferred embodiment, a defined number of subpixels is designed to provide an individual pixel of said electrochromic device, and wherein said first portion of subpixel electrodes encompasses only one or only part of the subpixels of said individual pixel. For example, in device using RGB additive colouring, three subpixels may form one pixel.

For example, referring to Fig. 2, the driving device **209** may be electronically controlled to apply a voltage potential only between pixel (or subpixel) electrode **115** and the counter electrode **210,** but not between pixels (or subpixels) **116** and **117** and the counter electrode, so that the entities of the organic electrochromic material are deposited on pixel electrodes **115** only, but not on the other pixel electrodes **116** and **117.**

The active matrix **220** shown is schematically shown in Fig. 2. There is a large number of pixel (or subpixel) electrodes present in an active matrix, the number depending on the size and resolution of the display. In an embodiment detailed above a pixel is formed by three subpixels, and reference numeral **115** may illustrate one subpixel electrode, and reference numerals **116, 117,** the two other subpixel electrodes that will be present in one pixel of the final device. In this case, the active matrix preferably contains many subpixel electrodes **115,** and an equal number of subpixel electrodes **116** and **117,** only one of the plurality of subpixels being shown for illustration in Fig. 2. Accordingly, in the embodiment of the method of the invention, the entities of the organic electrochromic material are deposited on all (sub-)pixel electrodes **115,** but not on the (sub-)pixel electrodes **116, 117** of the active matrix **220.**

In Fig. 2, reference numeral **115** may thus represent a first portion of pixel or subpixel electrodes, and thus all pixels or subpixels of that portion. By analogy, reference numeral **116** may represent a second portion of pixel or subpixel electrodes, and reference numeral **117** may represent a third portion of pixel or subpixel electrodes.

For avoidance of doubt, the invention is not limited to a particular number of portions of (sub-)pixel electrodes. Three portions of pixel electrodes are shown for illustration only. The invention also encompasses electrochromic devices comprising only one type of pixel electrodes, all pixels having the same organic electrochromic material and thus having the same color characteristics. The invention also encompasses single color and/or black & white devices, for example.

All pixel electrodes (or subpixel electrodes) **115** may thus represent the first portion or part of the pixel electrodes on which said entities of said organic electrochromic material are deposited.

Preferably, the deposition of said entities is selected from the group consisting of: electrodeposition, polymerization, electropolymerization and a combination of two or more of the aforementioned. Preferably, the deposition of said entities corresponds to deposition by electropolymerization. Preferably, the deposition of said organic entities results in the deposition of said organic electrochromic material.

In the embodiment where said organic entities are deposited only on a portion of pixel electrodes or subpixel electrodes, said entities are preferably first entities of a first organic electrochromic material **125.** Said first organic electrochromic material has preferably a first color. Similarly, said solution comprising said first entities of a first organic electrochromic material is preferably a first solution.

It is noted that said "first color" depends on the redox status of said first organic electrochromic material. The expression "first color" may be understood as "first electrochromic color characteristics", and the same applies per analogy to "second color" and "third color". In the same line, the expression "different color", is preferably understood as "different electrochromic color characteristics". One may also say that "the first color" refers to the "first light modulating properties", it is understood that "the second color" refers to light modulating properties that are different from said first light modulating properties, in particular with respect to the color of the light that is modulated.

In an embodiment, the method of the invention comprises:
- immersing said grid or matrix **220** in a second solution,
- adding second entities of a second organic electrochromic material to said second solution, wherein said first and second entities are different,
- applying an electric potential between a second portion of said plurality of pixel or subpixel electrodes and said counter electrode **210,** thereby providing the deposition of said second entities of said second organic electrochromic material **126** on said second portion of said plurality of pixel or subpixel electrodes,
wherein said first and second organic electrochromic material have a different color.

As with respect to the deposition of an organic electrochromic material on a first portion of said pixel or subpixel electrodes, the features of immersing said grid or matrix in a second solution and adding second entities of an organic electrochromic material may be conducted timely independently from each other. These features may be replaced by "providing a solution comprising said second entities, said grid or matrix **220** and said counter electrode **210".** Preferably, at this stage, the first organic electrochromic material **125** has already been deposited on the first portion of pixel or subpixel electrodes.

Furthermore, applying the voltage potential only between said second portion of pixel or subpixel electrodes **116,** but not on said first portion **115** and not on a possible third portion **117,** is preferably conducted using the external driver **209.**

The deposition of said second entities of said second organic electrochromic material **126** on said second portion of said plurality of pixel or subpixel electrodes preferably results in the electrodeposition and/or electropolymerization of said second organic electrochromic material. The latter material is thus preferably formed by said electrodeposition and/or electropolymerization.

In an embodiment, the method comprises rinsing said grid or matrix **220** before immersing said grid or matrix in said second solution and preferably after removing said grid or matrix from said first solution.

In an embodiment, the method of the invention comprises:
- immersing said grid or matrix **220** in a third solution,
- adding third entities of a third organic electrochromic material **127** to said third solution,
- applying an electric potential between a third portion **117** of said plurality of pixel or subpixel electrodes and said counter electrode **210,** thereby providing the deposition of said third entities of said third organic electrochromic material **127** on said third portion **117** of said plurality of pixel or subpixel electrodes,
wherein said first, second and third entities are all different from each other, and wherein said first, second and third organic electrochromic materials **125-127** have a different color.

As detailed above with respect to the deposition of a second organic electrochromic material, the features of immersing said grid or matrix in a third solution and adding entities of a third organic electrochromic material may be conducted timely independently from each other. These features may be replaced by providing a solution comprising said third entities and said grid or matrix. Furthermore, applying the voltage potential only between said third portion of pixel or subpixel electrodes **117,** but not on said first portion **115** and not on a second portion **116,** is preferably conducted using the external driver **209.**

In an embodiment, the method of the invention comprises rinsing said grid or matrix before immersing said grid or matrix in said third solution and preferably after removing said grid or matrix from said second solution.

The invention also provides a method for producing an electrochromic device in accordance with the invention, preferably an electrochromic display. In order to produce the device, organic electrochromic materials are deposited on array (or pixel or subpixel) electrodes in accordance with the aspects and preferred embodiments disclosed in this specification. Further components of the device are then assembled. Such further components comprise a counter electrode preferably comprising an ion storage layer and an ion transport layer. Preferably, an active matrix is provided in said device as disclosed with respect to the deposition of the organic electrochromic material. Other preferred components of the device are first and/or second substrates **100, 110.** Such devices may be assembled as is conventional.

For the avoidance of doubt, it is noted the terms pixels and subpixels are considered to be exchangeable in that reference to a pixel may encompass reference to a subpixel. The term subpixel is relevant basically in multi- or full color devices, when three independently addressable elements are perceived by a human observer as a spot having a particular color when seen from a certain distance from the device. The particular color of a pixel may thus be created by several separate but spatially close subpixels. The distinction between pixel and subpixel does not necessarily imply structural or other technical differences. In particular, in the figures, elements **105-107** are individually and independently addressable elements having the structure as described, independently of the elements being considered as "pixels", "subpixels", layered structures, arrangements, for examples, or otherwise. The aforementioned terms may thus be exchangeably used for referring to structures **105-107.**

### Example: Production of full-color electrochromic display

A full-color electrochromic display based on electropolymerization of red, green and blue electrochromic materials on different sub-pixel electrodes is produced as described below.

### 1. Working electrode preparation:

An active-matrix thin film transistor (AM-TFT) backplane is used as a working electrode. Adequate electrical connections are wired out, providing different groups of sub-pixels that are independently addressed. While a group of sub-pixels are addressed, the channels of that group of sub-pixels are activated so that a desired voltage could be applied on the corresponding pixel electrodes. For other groups of sub-pixels which are not addressed, the voltage of the pixel electrodes remains floating and there is no current supplied.

The AM-TFT backplane is inserted vertically into a tank facing an ITO glass substrate as a counter electrode (in other examples, a carbon felt or a platinum mesh are used as a counter electrode). The tank is filled with a solution comprising monomers suitable to form the electrochromic organic polymer which is to be deposited on the pixel electrodes, an electrolyte and a solvent mixture.

For realizing the full-color electrochromic display red, green and blue electrochromic polymer are sequentially electropolymerized of on one-third of the sub-pixel electrodes, resulting in each pixel containing three sub-pixels of red, green and blue electrochromic polymer materials.

For the deposition of the red electrochromic materials, a solution of 10 mM of 3,10-bis(2,3-dihydrothieno[3,4-b][1,4]dioxin-5-yl)-1-dodecyl-1H-phenanthro[1,10,9,8-c,d,e,f,g]carbazole (short as DEP) with 0.1 M tetrabutylammonium hexafluorophosphate (TBAPF6) in acetonitrile is used. Cyclic voltammetry method is used for conducting the electropolymerization. An Ag/AgCl standard reference electrode is used, and the voltage between the red pixel electrodes and the reference electrode are swept between -0.3V and 1.1V with a scanning rate of 100mV/s. The scanning cycle number is 10. During the electropolymerization of red electrochromic polymer, only the red sub-pixel electrodes are applied with the desired voltage while green and blue sub-pixel electrodes are not addressed. The AM-TFT backplane is removed from the tank, rinsed with de-ionized water and dried with compressed air or nitrogen gun.

For the deposition of the green electrochromic polymer, a solution of 2 mM 5,8-bis(2,3-dihydro[3,4-B][1,4]dioxin-5-yl)-2,3-dual(4-(hexadecyloxy) phenyl)quinoxaline (short as BOPEQ) with 0.1 M TBAPF6 in acetonitrile/dichloromethane (volume ratio: 8/2) is used. Cyclic voltammetry with sweeping voltage between -0.6 V and 1.1V, scanning rate of 100mV/s and cycle number of 10 is used for conducting the electropolymerization. After completing the deposition process, the AM-TFT backplane is removed from the tank, and cleaned and dried as described above.

For the deposition of the blue electrochromic polymer, a solution of 1 mM 5,5'-(3,6-diphenylthieno[3,2-b]thiophene-2,5-diyl)bis(2,3-dihydrothieno[3,4-b][1,4]dioxine) with 0.1 M TBAPF6 in acetonitrile/dichloromethane (volume ratio: 1/3) is used. The sweeping voltage between -0.8 V and 1.4V with scanning rate of 100mV/s for 10 cycles is used for conducting the deposition by electropolymerization.

### 2. Antimony doped tin oxide (ATO) paste preparation:

ATO mesoporous film is used as an ion storage layer on the counter electrode. The ATO paste is prepared as follows:
10.5g of antimony doped tin oxide (ATO) nanopowder (Alfa Aesar, particle size: 13 ~ 22 nm) is suspended in ethanol (400 ml) and sonicated for 1 hour with a horn sonicator. The resulting colloidal solution is mixed with 33 g ethyl cellulose solution (5%wt in ethanol: toluene 20:80 vol%) and 40 g terpineol respectively. The colloidal mixture is vigorously stirred for 30 minutes, followed by ethanol removal under reduced pressure (max. 60°C).

### 3. Counter electrode preparation:

An ITO substrate is used for preparing the counter electrode (in another example, a FTO substrate is used). The ATO paste is printed on the ITO substrate by screen printing. After the printing, the electrode is sintered at 450°C for 30min with a slow ramping speed of 10 °C/min from ambient temperature to avoid crack formation. The thickness of the sintered ATO mesoporous film is about 3µm.

### 4. Electrolytic solution filling and assembly:

An electrolytic solution is prepared by mixing lithium bis(trifluoromethanesulfonyl)imide, 4-Cyano-4'-pentylbiphenyl and sulfolane (weight ratio=75:500:18). The assembly is performed by a standard one drop filling instrument widely used in liquid crystal display (LCD) industries. The UV curing glue is dispensed along the edge of the working electrode. The sphere spacer of 10 um diameter is sprayed uniformly over the working electrode surface. Precise amount of electrolytic solution is dispensed within the frame of the sealing glue. The amount of electrolytic solution is calculated to perfectly fill the gap volume between working and counter electrodes. The counter electrode is then brought into contact with the sealing glue frame, further stopped by the sphere spacer. The glue is then cured with UV light. A full-color electrochromic display is thus completed.

While certain of the preferred embodiments of the present invention have been described and specifically exemplified above, it is not intended that the invention be limited to such embodiments. Various modifications may be made thereto without departing from the scope of the present invention, as set forth in the following claims. Herein below, examples of the invention are disclosed. These examples are for illustration only and are not intended to limit the scope of the present invention.

## Claims

1. A full-color electrochromic device (1) comprising:
- a plurality of pixels, wherein each pixel comprises first, second and third subpixels (105, 106, 107), wherein each subpixel comprises a subpixel electrode (115-117) and an organic electrochromic material (125-127), wherein said first subpixel (105) comprises a first organic electrochromic material (125), wherein said second subpixel (106) comprises a second organic electrochromic material (126), and wherein said third subpixel (107) comprises a third organic electrochromic material (127), said first, second and third organic electrochromic materials (125-127) having different colors so as to allow a full-color display by RGB additive color mixing;
- a first substrate (100) comprising an active matrix comprising electrically conducting lines (104, 108) and active components (101, 102, 103), for providing electrical current to said subpixel electrodes (115-117), wherein an active component (101, 102, 103) is provided for each of said subpixels (105-107), wherein one active component (101) is electrically connected to one subpixel electrode (115), and wherein a predetermined subpixel electric potential can be established via said active component (101);
- a second substrate (110), wherein said first and second substrates define opposed first and second outside surfaces (121, 122);
- one or more counter electrode (120) connected to said second substrate; and,
- an ion conducting material (109) for transporting ions between said subpixels and said one or more counter electrode (120);
wherein said electrochromic device (1) is configured to establish an electric potential between any one specific subpixel (105-107) and said one or more counter electrode (120), wherein said organic electrochromic materials (125-127) are electrodeposited organic polymer electrochromic materials obtained by electropolymerization on said subpixel electrodes (115-117).

2. The electrochromic device (1) of claim 1, comprising an insulating layer (114) provided between said first substrate (100) and said subpixel electrodes (115-117), wherein said subpixel electrodes are preferably deposited on said insulating layer, wherein said active matrix comprises electrically conducting vias (104) extending across said insulating layer, and wherein a via is provided to connect an individual active component (101, 102, 103) with an individual subpixel electrode (115, 116, 117).

3. The electrochromic device (1) of any one of the preceding claims, wherein said first subpixel (105) comprises an organic electrochromic material (125) having a red color when exposed to a particular voltage, said second subpixel (106) comprises an organic electrochromic material (126) having a green color when exposed to a particular voltage, and said third subpixel (107) comprises an organic electrochromic material (127) having a blue color when exposed to a particular voltage.

4. The electrochromic device (1) of any one of the preceding claims, wherein said ion conducting material (109) comprises one or both selected from a liquid crystal and an ionic liquid crystal.

5. The electrochromic device (1) of any one of the preceding claims, wherein said ion conducting material (109) is provided within a common space, wherein at least three separate subpixels (105, 106, 107) are provided within said common space and/or are in contact with a continuous ion conducting material (109).

6. The electrochromic device (1) of any one of the preceding claims, wherein said ion conducting material (109) is provided within a common space, wherein a plurality of pixels is provided within said common space and/or is in contact with a continuous ion conducting material (109).

7. The electrochromic device (1) of any one of claims 2-6, wherein said ion conducting material (109) is an electrolytic layer, wherein said one or more counter electrode (120) comprises an ion storage layer (112), wherein said second substrate (110), the one or more counter electrode (120) comprising the ion storage layer (112), and said ion conducting material (109) are transparent, and wherein the electrical insulating layer (114) is diffusively reflective, providing a reflective electrochromic display with white background, wherein users can perceive the images from the counter electrode side (122) of the display.

8. The electrochromic device (1) of any one of claims 2-6, wherein said ion conducting material (109) is an electrolytic layer, wherein said one or more counter electrode (120) comprises an ion storage layer (112), wherein said first substrate (100), the electrical insulating layer (114), the subpixel electrodes (115-117), the electrolytic layer, the second substrate (110), and the one or more counter electrode (120) comprising the ion storage layer (112) are transparent, providing a transparent electrochromic display, wherein users can perceive images from both sides of the display and wherein an object behind the display is kept visible.

9. A method for depositing an organic electrochromic material (125-127) on pixel electrodes (115) of a full-color electrochromic device, the method comprising:
- providing an active matrix (220) comprising a first substrate (110), electrically conducting lines (104, 108), active components (101, 102, 103) and a plurality of subpixel electrodes (115-117), wherein said active matrix comprises a specific line (104) for each of said subpixel electrodes (115-117),
- immersing said active matrix (220) in a first solution (200),
- adding first monomeric entities to said first solution,
- immersing a counter electrode (210) in said first solution,
- providing an external driving device (209),
- applying an electric potential between a first portion of said plurality of subpixel electrodes (115) and said counter electrode (210), so as to electropolymerize said first monomeric entities on said first portion of said plurality of subpixel electrodes (115), and thereby deposit a first organic polymer electrochromic material having a first color on said first portion of subpixel electrodes (115),
- immersing said active matrix (220) in a second solution,
- adding second monomeric entities to said second solution,
- applying an electric potential between a second portion of said plurality of subpixel electrodes and said counter electrode (210) so as to electropolymerize said second monomeric entities on said second portion of said plurality of subpixel electrodes (116) and thereby deposit a second organic polymer electrochromic material having a second color on said second portion of subpixel electrodes (116),
- immersing said active matrix (220) in a third solution,
- adding third monomeric entities to said third solution,
- applying an electric potential between a third portion of said plurality of subpixel electrodes and said counter electrode (210) so as to electropolymerize said third monomeric entities on said third portion of said plurality of subpixel electrodes (115), and thereby deposit a third organic polymer electrochromic material having a third color on said third portion of subpixel electrodes (117),
wherein said first, second and third monomeric entities are different from each other, wherein said first, second and third organic electrochromic materials have a different color, and wherein said first, second and third portions of subpixel electrodes are different portions of the active matrix, wherein a pixel electrode comprises three subpixel electrodes in which each subpixel electrode comprises a different electrochromic material, and wherein said full-color electrochromic device allows a full-color display by RGB additive color mixing.

10. The method of claim 9, which comprises rinsing said active matrix before immersing said active matrix in said second solution and preferably after removing said active matrix from said first solution, and which preferably comprises rinsing said active matrix before immersing said active matrix in said third solution and preferably after removing said active matrix from said second solution.

11. The method of any one of claims 9-10, wherein said active matrix comprises thin film transistors (TFTs), wherein every subpixel of said electrochromic device comprises an individual TFT for controlling current flow towards or from an individual subpixel electrode.

12. The method of any one of claims 9-11, wherein an insulating layer (114) is provided between said first substrate (100) and said subpixel electrodes (115-117), wherein said subpixel electrodes are preferably deposited on said insulating layer, wherein said active matrix comprises electrically conducting vias (104) extending across said insulating layer, and wherein a via is provided to connect an individual active component (101, 102, 103) with an individual, corresponding subpixel electrode (115, 116, 117).

13. The method of any one of claims 9-12, comprising:
- assembling a counter electrode and an ion transport material (109) in order to provide said electrochromic device.

14. The method of claim 13, wherein said ion transport material comprises one or both selected from a liquid crystal and an ionic liquid crystal.

15. The device of any one of claims 1-8 and the method of any one of claims 9-14, which lacks separation walls, parts, borders and/or regions parts for electrically separating the pixels and/or subpixels.

## Patentansprüche

1. Eine elektrochrome Vollfarb-Vorrichtung (1), die Folgendes umfasst:
- eine Vielzahl von Pixeln, wobei jedes Pixel ein erstes, zweites und drittes Subpixel (105, 106, 107) umfasst, wobei jedes Subpixel eine Subpix-Elelektrode (115-117) und ein organisches elektrochromes Material (125-127) umfasst, wobei das erste Subpixel (105) ein erstes organisches elektrochromes Material (125) umfasst, wobei das zweite Subpixel (106) ein zweites organisches elektrochromes Material (126) umfasst, und wobei das dritte Subpixel (107) ein drittes organisches elektrochromes Material (127) umfasst, wobei das erste, zweite und dritte organische elektrochrome Material (125-127) unterschiedliche Farben aufweisen, um eine Vollfarb- Anzeige durch additive RGB-Farbmischung zu ermöglichen;
- ein erstes Substrat (100), das eine aktive Matrix umfasst, die elektrisch leitende Leitungen (104, 108) und aktive Komponenten (101, 102, 103) zum Versorgen der Subpixel-Elektroden (115-117) mit elektrischem Strom umfasst, wobei eine aktive Komponente (101, 102, 103) für jedes der Subpixel (105-107) vorgesehen ist, wobei eine aktive Komponente (101) elektrisch mit einer Subpixel-Elektrode (115) verbunden ist, und wobei ein vorbestimmtes elektrisches Subpixel-Potential über die aktive Komponente (101) hergestellt werden kann;
- ein zweites Substrat (110), wobei das erste und das zweite Substrat einander gegenüberliegende, erste und zweite Außenflächen (121, 122) definieren;
- eine oder mehrere Gegenelektroden (120), die mit dem zweiten Substrat verbunden sind; und,
- ein ionenleitendes Material (109) zum Transportieren von Ionen zwischen den Subpixeln und einer oder mehreren Gegenelektroden (120);
wobei die elektrochrome Vorrichtung (1) so konfiguriert ist, dass sie ein elektrisches Potential zwischen einem beliebigen spezifischen Subpixel (105-107) und der besagten einen oder mehreren Gegenelektroden (120) erzeugt, wobei die organischen elektrochromen Materialien (125-127) elektrolytisch deponierte organische polymere elektrochrome Materialien sind, die durch Elektropolymerisation auf den Subpixel-Elektroden (115-117) erhalten wurden.

2. Elektrochrome Vorrichtung (1) nach Anspruch 1, die eine Isolierschicht (114) umfasst, die zwischen dem ersten Substrat (100) und den Subpixel-Elektroden (115-117) vorgesehen ist, wobei die Subpixel-Elektroden vorzugsweise auf der Isolierschicht aufgebracht werden, wobei die aktive Matrix elektrisch leitende Durchkontaktierungen (104) umfasst, die sich über die Isolierschicht erstrecken, und wobei eine Durchkontaktierung vorgesehen ist, um eine einzelne aktive Komponente (101, 102, 103) mit einer einzelnen Subpixel-Elektrode (115, 116, 117) zu verbinden.

3. Elektrochrome Vorrichtung (1) nach einem der vorhergehenden Ansprüche, wobei das erste Subpixel (105) ein organisches elektrochromes Material (125) umfasst, das eine rote Farbe aufweist, wenn es einer bestimmten Spannung ausgesetzt wird, das zweite Subpixel (106) ein organisches elektrochromes Material (126) umfasst, das eine grüne Farbe aufweist, wenn es einer bestimmten Spannung ausgesetzt wird, und das dritte Subpixel (107) ein organisches elektrochromes Material (127) umfasst, das eine blaue Farbe aufweist, wenn es einer bestimmten Spannung ausgesetzt wird.

4. Elektrochrome Vorrichtung (1) nach einem der vorhergehenden Ansprüche, wobei das ionenleitende Material (109) eines oder beide ausgewählt aus Flüssigkristall und ionischem Flüssigkristall umfasst.

5. Elektrochrome Vorrichtung (1) nach einem der vorhergehenden Ansprüche, wobei das ionenleitende Material (109) innerhalb eines gemeinsamen Raums vorgesehen ist, wobei mindestens drei separate Subpixel (105, 106, 107) innerhalb des gemeinsamen Raums vorgesehen sind und/oder in Kontakt mit einem kontinuierlichen ionenleitenden Material (109) sind.

6. Elektrochrome Vorrichtung (1) nach einem der vorhergehenden Ansprüche, wobei das ionenleitende Material (109) innerhalb eines gemeinsamen Raums vorgesehen ist, wobei eine Vielzahl von Pixeln innerhalb des gemeinsamen Raums vorgesehen ist und/oder in Kontakt mit einem kontinuierlichen ionenleitenden Material (109) ist.

7. Elektrochrome Vorrichtung (1) nach einem der Ansprüche 2 bis 6, wobei das ionenleitende Material (109) eine elektrolytische Schicht ist, wobei die besagte eine oder mehrere Gegenelektroden (120) eine Ionenspeicherschicht (112) umfassen, wobei das zweite Substrat (110), die eine oder mehrere Gegenelektroden (120) mit der Ionenspeicherschicht (112) und das ionenleitende Material (109) transparent sind, und wobei die elektrische Isolierschicht (114) diffus reflektierend ist, wodurch eine reflektierende elektrochrome Anzeige mit weißem Hintergrund bereitgestellt wird, wobei Benutzer die Bilder von der Gegenelektrodenseite (122) der Anzeige wahrnehmen können.

8. Elektrochrome Vorrichtung (1) nach einem der Ansprüche 2 bis 6, wobei das ionenleitende Material (109) eine elektrolytische Schicht ist, wobei die besagte eine oder mehrere Gegenelektroden (120) eine Ionenspeicherschicht (112) umfassen, wobei das erste Substrat (100), die elektrische Isolierschicht (114), die Subpixel-Elektroden (115-117), die elektrolytische Schicht, das zweite Substrat (110) und die eine oder mehrere Gegenelektroden (120), die die Ionenspeicherschicht (112) umfassen, transparent sind, wodurch eine transparente elektrochrome Anzeige bereitgestellt wird, bei der Benutzer Bilder von beiden Seiten der Anzeige wahrnehmen können und bei der ein Objekt hinter der Anzeige sichtbar gehalten wird.

9. Verfahren zum Aufbringen eines organischen elektrochromen Materials (125-127) auf Pixelel-Elektroden (115) einer elektrochromen Vollfarb-Vorrichtung, wobei das Verfahren Folgendes umfasst:
- Bereitstellung einer aktiven Matrix (220), die ein erstes Substrat (110), elektrisch leitende Leitungen (104, 108), aktive Komponenten (101, 102, 103) und eine Vielzahl von Subpixel-Elektroden (115-117) umfasst, wobei die aktive Matrix eine spezifische Leitung (104) für jede der Subpixel-Elektroden (115-117) umfasst,
- Eintauchen der aktiven Matrix (220) in eine erste Lösung (200),
- Zugabe von ersten Monomereinheiten zur ersten Lösung,
- Eintauchen einer Gegenelektrode (210) in die erste Lösung,
- Bereitstellung einer externen Antriebsvorrichtung (209),
- Anlegen eines elektrischen Potentials zwischen einem ersten Teil der Vielzahl von Subpixel-Elektroden (115) und der Gegenelektrode (210), um die ersten Monomereinheiten auf dem ersten Teil der Vielzahl von Subpixel-Elektroden (115) zu elektropolymerisieren und dadurch ein erstes elektrochromes organisches Polymermaterial mit einer ersten Farbe auf dem ersten Teil der Subpixel-Elektroden (115) abzulegen,
- Eintauchen der aktiven Matrix (220) in eine zweite Lösung,
- Zugabe von zweiten Monomereinheiten zur zweiten Lösung,
- Anlegen eines elektrischen Potentials zwischen einem zweiten Teil der Vielzahl von Subpixel-Elektroden und der Gegenelektrode (210), um die zweiten Monomereinheiten auf dem zweiten Teil der Vielzahl von Subpixel-Elektroden (116) zu elektropolymerisieren und dadurch ein zweites organisches polymeres elektrochromes Material mit einer zweiten Farbe auf dem zweiten Teil der Subpixel-Elektroden (116) abzulegen,
- Eintauchen der aktiven Matrix (220) in eine dritte Lösung,
- Zugabe von dritten Monomereinheiten zur dritten Lösung,
- Anlegen eines elektrischen Potentials zwischen einem dritten Teil der Vielzahl von Subpixel-Elektroden und der Gegenelektrode (210), um die dritten Monomereinheiten auf dem dritten Teil der Vielzahl von Subpixel-Elektroden (115) zu elektropolymerisieren und dadurch ein drittes organisches polymeres elektrochromes Material mit einer dritten Farbe auf dem dritten Teil der Subpixel-Elektroden (117) abzulegen,
wobei die ersten, zweiten und dritten Monomereinheiten voneinander verschieden sind, wobei die ersten, zweiten und dritten organischen elektrochromen Materialien eine unterschiedliche Farbe haben, und wobei die ersten, zweiten und dritten Teile von Subpixel-Elektroden unterschiedliche Teile der aktiven Matrix sind, wobei eine Pixel-Elektrode drei Subpixel-Elektroden umfasst, in denen jede Subpixel-Elektrode ein unterschiedliches elektrochromes Material umfasst, und wobei die elektrochrome Vollfarb-Vorrichtung eine Vollfarb-Anzeige durch additive RGB-Farbmischung ermöglicht.

10. Verfahren nach Anspruch 9, welches das Spülen der aktiven Matrix vor dem Eintauchen der aktiven Matrix in die zweite Lösung und vorzugsweise nach dem Entfernen der aktiven Matrix aus der ersten Lösung umfasst, und das vorzugsweise das Spülen der aktiven Matrix vor dem Eintauchen der aktiven Matrix in die dritte Lösung und vorzugsweise nach dem Entfernen der aktiven Matrix aus der zweiten Lösung umfasst.

11. Verfahren nach einem der Ansprüche 9-10, wobei die aktive Matrix Dünnschichttransistoren (TFTs) umfasst, wobei jedes Subpixel der elektrochromen Vorrichtung einen individuellen TFT zur Steuerung des Stromflusses zu oder von einer individuellen Subpixel-Elektrode umfasst.

12. Verfahren nach einem der Ansprüche 9-11, wobei eine Isolierschicht (114) zwischen dem ersten Substrat (100) und den Subpixel-Elektroden (115-117) vorgesehen ist, wobei die Subpixel-Elektroden vorzugsweise auf der Isolierschicht aufgebracht werden, wobei die aktive Matrix elektrisch leitende Durchkontaktierungen (104) umfasst, die sich durch die Isolierschicht erstrecken, und wobei eine Durchgangkontaktierung vorgesehen ist, um eine einzelne aktive Komponente (101, 102, 103) mit einer einzelnen, zugehörigen Subpixel-Elektrode (115, 116, 117) zu verbinden.

13. Das Verfahren nach einem der Ansprüche 9 bis 12, das Folgendes umfasst:
- Zusammenbau einer Gegenelektrode und eines Ionentransportmaterials (109), um die elektrochrome Vorrichtung bereitzustellen.

14. Verfahren nach Anspruch 13, wobei das Ionentransportmaterial einen Flüssigkristall einen ionischen Flüssigkristall, oder beides umfasst.

15. Vorrichtung nach einem der Ansprüche 1 bis 8 und Verfahren nach einem der Ansprüche 9 bis 14, wobei Trennwände, -teile, -ränder und/oder -bereiche zum elektrischen Trennen der Pixel und/oder Subpixel fehlen.

## Revendications

1. Dispositif électrochrome en couleur (1) comprenant :
- une pluralité de pixels, dans lequel chaque pixel comprend un premier, un deuxième et un troisième sous-pixels (105, 106, 107), dans lequel chaque sous-pixel comprend une électrode de sous-pixel (115-117) et un matériau électrochrome organique (125-127), dans lequel ledit premier sous-pixel (105) comprend un premier matériau électrochrome organique (125), dans lequel ledit deuxième sous-pixel (106) comprend un deuxième matériau électrochrome organique (126), et dans lequel ledit troisième sous-pixel (107) comprend un troisième matériau électrochrome organique (127), lesdits premier, deuxième et troisième matériaux électrochromes organiques (125-127) présentant des couleurs différentes de manière à permettre un affichage en couleur par mélange additif de couleurs RGB ;
- un premier substrat (100) comprenant une matrice active comprenant des lignes électriquement conductrices (104, 108) et des composants actifs (101, 102, 103), pour fournir un courant électrique auxdites électrodes de sous-pixel (115-117), dans lequel un composant actif (101, 102, 103) est fourni pour chacun desdits sous-pixels (105-107), dans lequel un composant actif (101) est électriquement connecté à une électrode de sous-pixel (115), et dans lequel un potentiel électrique sous-pixel prédéterminé peut être établi par l'intermédiaire dudit composant actif (101) ;
- un second substrat (110), dans lequel lesdits premier et second substrats définissent des premières et secondes surfaces extérieures opposées (121, 122) ;
- une ou plusieurs contre-électrodes (120) reliées audit second substrat ; et,
- un matériau conducteur d'ions (109) pour transporter les ions entre lesdits sous-pixels et ladite une ou lesdites plusieurs contre-électrodes (120) ;
dans lequel ledit dispositif électrochrome (1) est configuré pour établir un potentiel électrique entre un quelconque sous-pixel spécifique (105-107) et ladite une ou lesdites plusieurs contre-électrodes (120), dans lequel lesdits matériaux électrochromes organiques (125-127) sont des matériaux électrochromes polymères organiques électrodéposés obtenus par électropolymérisation sur lesdites électrodes de sous-pixel (115-117).

2. Dispositif électrochrome (1) selon la revendication 1, comprenant une couche isolante (114) prévue entre ledit premier substrat (100) et lesdites électrodes de sous-pixel (115-117), dans lequel lesdites électrodes de sous-pixel sont de préférence déposées sur ladite couche isolante, dans lequel ladite matrice active comprend des interconnexions électriquement conductrices (104) se prolongeant à travers ladite couche isolante, et dans lequel une interconnexion est prévue pour relier un composant actif individuel (101, 102, 103) et une électrode de sous-pixel individuelle (115, 116, 117).

3. Dispositif électrochrome (1) selon l'une quelconque des revendications précédentes, dans lequel ledit premier sous-pixel (105) comprend un matériau électrochrome organique (125) présentant une couleur rouge lorsqu'il est exposé à une tension particulière, ledit deuxième sous-pixel (106) comprend un matériau électrochrome organique (126) présentant une couleur verte lorsqu'il est exposé à une tension particulière, et ledit troisième sous-pixel (107) comprend un matériau électrochrome organique (127) présentant une couleur bleue lorsqu'il est exposé à une tension particulière.

4. Dispositif électrochrome (1) selon l'une quelconque des revendications précédentes, dans lequel ledit matériau conducteur d'ions (109) comprend un cristal liquide ou un cristal liquide ionique, ou les deux.

5. Dispositif électrochrome (1) selon l'une quelconque des revendications précédentes, dans lequel ledit matériau conducteur d'ions (109) se trouve dans un espace commun, dans lequel au moins trois sous-pixels distincts (105, 106, 107) se trouvent dans cet espace commun et/ou sont en contact avec un matériau conducteur d'ions (109) continu.

6. Dispositif électrochrome (1) selon l'une quelconque des revendications précédentes, dans lequel ledit matériau conducteur d'ions (109) se trouve dans un espace commun, dans lequel une pluralité de pixels se trouvent dans ledit espace commun et/ou sont en contact avec un matériau conducteur d'ions (109) continu.

7. Dispositif électrochrome (1) selon l'une quelconque des revendications 2 à 6, dans lequel ledit matériau conducteur d'ions (109) est une couche électrolytique, dans lequel ladite une ou lesdites plusieurs contre-électrode (120) comprend une couche de stockage d'ions (112), dans lequel ledit second substrat (110), ladite une ou lesdites plusieurs contre-électrodes (120) comprenant la couche de stockage d'ions (112), et ledit matériau conducteur d'ions (109) sont transparents, et dans lequel la couche isolante électrique (114) est réfléchissante de manière diffuse, fournissant un affichage électrochrome réfléchissant à fond blanc, dans lequel les utilisateurs peuvent percevoir les images du côté contre-électrode (122) de l'affichage.

8. Dispositif électrochrome (1) selon l'une quelconque des revendications 2 à 6, dans lequel ledit matériau conducteur d'ions (109) est une couche électrolytique, dans lequel ladite une ou lesdites plusieurs contre-électrodes (120) comprend une couche de stockage d'ions (112), dans lequel ledit premier substrat (100), la couche isolante électrique (114), les électrodes de sous-pixel (115-117), la couche électrolytique, le second substrat (110) et ladite une ou lesdites plusieurs contre-électrodes (120) comprenant la couche de stockage d'ions (112) sont transparents, fournissant un affichage électrochrome transparent, dans lequel les utilisateurs peuvent percevoir des images des deux côtés de l'affichage et dans lequel un objet situé derrière l'affichage reste visible.

9. Procédé de dépôt d'un matériau électrochrome organique (125-127) sur des électrodes de pixel (115) d'un dispositif électrochrome en couleur, le procédé comprenant :
- la fourniture d'une matrice active (220) comprenant un premier substrat (110), des lignes électriquement conductrices (104, 108), des composants actifs (101, 102, 103) et une pluralité d'électrodes de sous-pixel (115-117), dans lequel ladite matrice active comprend une ligne spécifique (104) pour chacune des électrodes de sous-pixel (115-117),
- l'immersion de ladite matrice active (220) dans une première solution (200),
- l'ajout de premières entités monomériques à ladite première solution,
- l'immersion d'une contre-électrode (210) dans ladite première solution,
- la fourniture d'un dispositif d'entraînement externe (209),
- l'application d'un potentiel électrique entre une première partie de ladite pluralité d'électrodes de sous-pixel (115) et ladite contre-électrode (210), de manière à électropolymériser lesdites premières entités monomères sur ladite première partie de ladite pluralité d'électrodes de sous-pixel (115), et ainsi déposer un premier matériau électrochrome polymère organique présentant une première couleur sur ladite première partie d'électrodes de sous-pixel (115),
- l'immersion de ladite matrice active (220) dans une deuxième solution,
- l'ajout de deuxièmes entités monomériques à ladite deuxième solution,
- l'application d'un potentiel électrique entre une deuxième partie de ladite pluralité d'électrodes de sous-pixel et ladite contre-électrode (210), de manière à électropolymériser lesdites deuxièmes entités monomères sur ladite deuxième partie de ladite pluralité d'électrodes de sous-pixel (116) et ainsi déposer un deuxième matériau électrochrome polymère organique présentant une deuxième couleur sur ladite deuxième partie d'électrodes de sous-pixel (116),
- l'immersion de ladite matrice active (220) dans une troisième solution,
- l'ajout de troisièmes entités monomériques à ladite troisième solution,
- l'application d'un potentiel électrique entre une troisième partie de ladite pluralité d'électrodes de sous-pixel et ladite contre-électrode (210), de manière à électropolymériser lesdites troisièmes entités monomères sur ladite troisième partie de ladite pluralité d'électrodes de sous-pixel (115) et ainsi déposer un troisième matériau électrochrome polymère organique présentant une troisième couleur sur ladite troisième partie d'électrodes de sous-pixel (117),
dans lequel lesdites premières, deuxièmes et troisièmes entités monomériques sont différentes les unes des autres, dans lequel lesdits premier, deuxième et troisième matériaux électrochromes organiques ont une couleur différente, et dans lequel lesdites première, deuxième et troisième parties d'électrodes de sous-pixel sont des parties différentes de la matrice active, dans lequel une électrode de pixel comprend trois électrodes de sous-pixel dans laquelle chaque électrode de sous-pixel comprend un matériau électrochrome différent, et dans lequel ledit dispositif électrochrome en couleur permet un affichage en couleur par mélange additif de couleurs RGB.

10. Procédé selon la revendication 9, qui comprend le rinçage de ladite matrice active avant d'immerger ladite matrice active dans ladite deuxième solution et de préférence après le retrait de ladite matrice active de ladite première solution, et qui comprend de préférence le rinçage de ladite matrice active avant d'immerger ladite matrice active dans ladite troisième solution et de préférence après le retrait de ladite matrice active de ladite deuxième solution.

11. Procédé selon l'une quelconque des revendications 9 à 10, dans lequel ladite matrice active comprend des transistors en couches minces (TFT), dans lequel chaque sous-pixel dudit dispositif électrochrome comprend un TFT individuel pour contrôler le flux de courant vers ou à partir d'une électrode de sous-pixel individuelle.

12. Procédé selon l'une quelconque des revendications 9 à 11, dans lequel une couche isolante (114) est prévue entre ledit premier substrat (100) et lesdites électrodes de sous-pixel (115-117), dans lequel lesdites électrodes de sous-pixel sont de préférence déposées sur ladite couche isolante, dans lequel ladite matrice active comprend des interconnexions électriquement conductrices (104) se prolongeant à travers ladite couche isolante, et dans lequel une interconnexion est prévue pour relier un composant actif individuel (101, 102, 103) et une électrode de sous-pixel individuelle (115, 116, 117) correspondante.

13. Procédé selon l'une quelconque des revendications 9 à 12, comprenant :
- l'assemblage d'une contre-électrode et d'un matériau transporteur d'ions (109) afin de fournir ledit dispositif électrochrome.

14. Procédé selon la revendication 13, dans lequel ledit matériau transporteur d'ions comprend un cristal liquide ou un cristal liquide ionique, ou les deux.

15. Dispositif selon l'une quelconque des revendications 1 à 8 et procédé selon l'une quelconque des revendications 9 à 14, dépourvu de parois de séparation, de parties, de bordures et/ou de parties de régions pour séparer électriquement les pixels et/ou les sous-pixels.
